# EUROPEAN PATENT APPLICATION

(11) **EP 1 270 188 A1**
(43) Date of publication of application: **02.01.2003**
(21) Application number: 01650075.3
(22) Date of filing: 29.06.2001
(51) Int. Cl.: B29C 73/16

(54) **Tyre puncture sealant composition**

(71) Applicant: SUPERSEAL INTERNATIONAL LIMITED, Portadown BT62 1RG, Nothern Ireland (GB)
(72) Inventor: Lavery, John, Portadown BT62 1QU, Northern Ireland (GB)
(74) Representative: Schütte, Gearoid

(57) **Abstract**

A tyre sealant composition comprises an adhesive which includes polyvinyl acetate, a blocking agent which includes surface activated rubber particles, water and a dispersion agent comprising an electrostatic charged material. The dispersion agent ensures an even distribution of the sealout composition on an inner surface of the tyre. In use, a quantity of the composition is pumped into a tyre on a vehicle. Driving the vehicle coats an interior of the tyre with the composition. Should a puncturing object such as a nail pierce the tyre wall, the sealant will seal around the object. If the object is removed the composition flows into the puncture hole under the action of air pressure within the tyre to fill and seal the hole providing a permanent repair of the hole.

## Description

### Introduction

This invention relates to tyre puncture sealant compositions.

It is well known to provide compositions for injection into a tyre for temporary or permanent repair of a puncture. For example Patent Specification No. WO 96/05048 discloses a liquid composition for the self sealing of punctures comprising a filler such as synthetic fibres or comminuted rubber particles, glycol, a tackifier and water.

While known tyre sealant compositions do provide puncture protection, they have not been entirely satisfactory. One problem is the dispersion of the sealant within the tyre. Some compositions tend to settle at the bottom of the tyre or be unevenly dispersed on an inner surface of the tyre. This renders the tyre unbalanced which is particularly noticeable at speeds in excess of 50 mph. Also, a number of sealant compositions include fibrous blocking agents such as cotton fibres. These can dry out after a period of use re-opening the puncture hole. Further, some of the compositions contain agents which attack and corrode the metal wheel rims. Many of the compositions are relatively expensive to produce.

It is also known to provide aerosol cans of sealant composition for an instant temporary repair. The sealant is injected into the tyre after a puncture has occurred.
These sealant compositions are designed to allow the driver to get the vehicle to a garage for repair. However, it is not a permanent repair. Also, the foam solutions used tend to be very sticky and form a sticky mess within the tyre such that many garages will refuse to repair the tyre because of this sticky mess.

It is an object of the present invention to overcome these problems and to provide an improved tyre sealant composition which is effective in operation and economic to produce.

### Statements of Invention

According to the invention, there is provided a flowable sealant composition for lining an inner surface of a tyre for puncture repair including an adhesive, a particulate blocking agent of flexible material, and water characterised in that the composition further includes a dispersion agent which comprises an electrostatic charged material.
This increases the thixotropic properties of the composition and allows it to permeate a wide area. Advantageously, the electrostatically charged material resists any tendency of the composition to clump and promotes an even dispersion of the composition on an inner surface of a tyre in use. Thus, the tyre will remain balanced during use of the composition within the tyre. In a particularly preferred embodiment the dispersion agent comprises 10% by weight of positively charged high-density polythene powder in water. The friction resulting from a moving tyre causes a build up of positively charged ions that has the effect of making the sealant spread out.

In a particularly preferred embodiment of the invention the blocking agent includes rubber material in combination with a plastics material. Any suitable plastics material which has nylon or polystyrene may be used and may be somewhat stiffer than the rubber material. The plastics material may be provided in plastic bead form.
Preferably at least 50% of the blocking agent is formed by the rubber material. Ideally the blocking agent includes between 70% and 80% rubber material, preferably about 75% rubber material.

The rubber in the blocking agent may be provided by rubber crumb formed by a mixture of rubber fibres and rubber dust particles. The rubber material used in the blocking agent can conveniently be obtained from recycled rubber tyres. The rubber crumb may be surface activated by placing it in contact with potassium permanganate and hydrogen peroxide. This etches the surface of the rubber and increases its "stickability" properties. Advantageously, when a puncture occurs, the rubber material is carried in the composition into the puncture hole being forced outwardly by tyre pressure to fill the hole within which the composition sets to effectively form a bung sealing the puncture.

Preferably, a water based adhesive is used. Most preferably, the adhesive includes polyvinyl acetate. Thus, as the composition moves outwardly through a puncture opening when the composition meets the exterior, some polyvinyl acetate material evaporates forming a waterproof skin. The preferred adhesive is solvitose which is supplied in flake form and is mixed with water for use. Polyvinyl acetate is added to the adhesive in the ratio of 1 litre of polyvinyl acetate to 5 litres of adhesive.

Ideally, the composition includes a rubber preservative which may be an anti-oxidant for example.

In another embodiment, to prevent metal corrosion of the wheel rim, the composition includes a corrosion inhibitor.

In a further embodiment, the composition includes a cooling agent. A preferred cooling agent is ethylene glycol. This acts both as a coolant and as an antifreeze allowing the composition to function in below freezing temperatures of the order of -40°C. The composition will remain effective even at temperatures in excess of 90°C.

In a preferred embodiment, the viscosity of the composition is regulated to about 3,000 pascal seconds.

### Detailed Description of the Invention

The invention will be more clearly understood by the following examples of embodiments of the invention.

### Example 1

A tyre sealant composition of the invention was formulated by mixing together the following components:

| | **Percentage by Weight** |
|---|---|
| Blocking agent (particulate rubber) | 6 |
| Blocking agent (particulate nylon) | 2 |
| Adhesive (incl. polyvinyl acetate) | 12 |
| Ethylene glycol | 30 |
| Dispersion agent (electrostatically charged) | 1 |
| Rust inhibitor (sodium metasilicate) | 0.5 |
| Rubber preservative (calcium carbonate) | 0.5 |
| Water | 48 |

### Example 2

A tyre sealant composition of the invention was formulated by mixing together the following components:

| | **Percentage by Weight** |
|---|---|
| Blocking agent (particulate rubber) | 4 |
| Blocking agent (particulate nylon) | 4 |
| Adhesive (inc. polyvinyl acetate) | 12 |
| Ethylene glycol | 30 |
| Dispersion agent (electrostatically charged) | 1 |
| Rust inhibitor (sodium metasilicate) | 0.5 |
| Rubber preservative (calcium carbonate) | 0.5 |
| Water | 48 |

### Example 3

A tyre sealant composition of the invention was formulated by mixing together the following components:-

| | **Percentage by Weight** |
|---|---|
| Blocking agent (particulate rubber) | 8 |
| Adhesive (incl. polyvinyl acetate) | 12 |
| Ethylene glycol | 30 |
| Dispersion agent (electrostatically charged) | 1 |
| Rust inhibitor (sodium metasilicate) | 0.5 |
| Rubber preservative (calcium carbonate) | 0.5 |
| Water | 48 |

In use, with a standard car tyre for example, approximately 300 ml of the tyre sealant composition is pumped into the tyre via the valve housing from which the valve has been removed. After re-insertion of the valve, the tyre is inflated. The vehicle is then taken for a short drive to circulate the sealant composition all around the tyre interior.
Should a puncturing object such as a nail pierce the tyre wall, the sealant will seal around the nail. If the protruding object leaves the tyre, the composition flows into the puncture hole under the action of the air pressure within the tyre to fill and seal the hole providing a permanent bung in the hole.

It will be appreciated that the tyre sealant composition according to the invention uses naturally occurring substances and non-toxic bio-degradable chemicals to provide an effective and permanent puncture sealing composition. The fact that the composition will readily flow into any openings and provides an effective tyre seal eliminates under inflation which in turn leads to savings in fuel consumption and tyre wear. Further, the sealant composition will not dry out or corrode the wheel rim on which a tyre is mounted. Also, the even dispersion achieved using the compound ensures wheel imbalance is avoided so there is no adverse effect on the handling performance of the vehicle. As the composition is biodegradable, it presents no problems in disposal before or after use and can be flushed out of a tyre with water leaving no residual stickiness or composition remaining inside the tyre. As previously described, the composition remains effective over a wide temperature range, including subzero temperatures. The sealing composition can be effectively used in both tube and tubeless tyres.

The invention is not limited to the embodiments hereinbefore described which may be varied in both construction and detail within the scope of the appended claims.

## Claims

1. A flowable sealant composition for lining an inner surface of a tyre for puncture repair including an adhesive, a particulate blocking agent of flexible material, and water **characterised in that** the composition further includes a dispersion agent which comprises an electrostatic charged material.

2. A tyre sealant composition as claimed in claim 1 wherein the blocking agent includes rubber material in combination with a plastics material.

3. A tyre sealant composition as claimed in claim 2 wherein at least 50% of the blocking agent comprises rubber material.

4. A tyre sealant composition as claimed in claim 3 wherein at least 75% of the blocking agent comprises rubber material.

5. A tyre sealant composition as claimed in claim 3 wherein the blocking agent includes between 70% and 80% rubber material.

6. A tyre sealant composition as claimed in any of claims 2 to 5 wherein the blocking agent includes rubber crumb which is provided by a mixture of rubber fibres and rubber dust particles and preferably the rubber crumb is surface activated.

7. A tyre sealant composition as claimed in any preceding claim wherein the adhesive is a water based adhesive, and preferably the adhesive includes polyvinyl acetate.

8. A tyre sealant composition as claimed in any preceding claim wherein the composition includes a rubber preservative, a corrosion inhibitor and a cooling agent, and preferably the viscosity of the composition is about 3000 pascal seconds.

9. A tyre sealant composition as claimed in any preceding claim wherein the composition includes 8% by weight of blocking agent.

10. A tyre sealant composition as claimed in any preceding claim wherein the composition includes 8% blocking agent, 12% adhesive, 30% ethylene glycol, 1% electrostatically charged dispersion agent, 0.5% sodium metasilicate, 0.5% calcium carbonate and 48% water, all percentages being by weight.
